# EUROPEAN PATENT APPLICATION

(11) **EP 1 906 405 A2**
(43) Date of publication of application: **02.04.2008**
(21) Application number: 07116957.7
(22) Date of filing: 21.09.2007
(51) Int. Cl.: G11B 27/034, G11B 27/34

(54) **Apparatus and method for managing multimedia content in mobile terminal**

(30) Priority: 26.09.2006 KR 20060093392
(71) Applicant: Samsung Electronics Co., Ltd., Suwon-si, Gyeonggi-do 442-743 (KR)
(72) Inventor: Kim, Jung-Hun, Pusan (KR); Rhee, Young-Ho, Seoul (KR); Kim, Jae-Hwan, Gyeonggi-do (KR)
(74) Representative: Grünecker, Kinkeldey, Stockmair & Schwanhäusser Anwaltssozietät

(57) **Abstract**

An apparatus and method for managing multimedia content in a mobile terminal are provided. The apparatus includes a memory; a screen mapping unit; a speech balloon insertion unit: and a storyboard creation unit. The memory stores different varieties of multimedia content and a storyboard. The screen mapping unit adjusts an image or a moving picture to a frame size and inserts the adjusted image or moving picture in a frame of the storyboard. The speech balloon insertion unit inserts a speech balloon in the frame of the storyboard. Upon the selection of format of the storyboard to be created, the storyboard creation unit controls the screen mapping unit and the speech balloon insertion unit to insert the image, the moving picture, or the speech balloon in the frame of the storyboard.

## Description

The present invention relates generally to an apparatus and method for managing multimedia content in a mobile terminal, and in particular, to an apparatus and method for re-editing and managing multimedia contents as a cartoon type storyboard.

In recent years, mobile terminals such as mobile communication terminals or Personal Digital Assistants (PDAs) have been in great use. Today, mobile terminal technology continues to progress in ways that now allow users to perform a multitude of unique functions, such as, for example, photographing an image or a moving picture by an equipped digital camera, viewing satellite broadcasting, editing a document, playing a game, navigating a road, listening to music, and transmitting/receiving a short message and a multimedia message attached with a photographed image or moving picture, as well as performing simple telephone or schedule management. As such, because of these various functions and features, mobile terminals are now considered enabling tools for composing media in various formats.

In addition, with today's mobile terminal technology, users can compose and store multimedia content like a short message, a multimedia message, a moving picture, and a photograph. This kind of multimedia content creation continues to increase in popularity and usage. However, conventional methods of managing and arranging multimedia content created in a mobile terminal usually involve arranging the content by name or composition time, while other kinds of content can not be re-edited or rearranged into one content file according to user's intention.

Thus, it is the object of the invention to provide an apparatus and method for re-editing and managing several types of multimedia content files as one content file in mobile terminal in response to a user's request.

This object is solved by the subject matter of the independent claims.

Preferred embodiments are defined in the dependent claims.

An aspect of the present invention is to substantially solve at least the above problems and/or disadvantages and to provide at least the advantages below. Accordingly, one aspect of the present invention is to provide an apparatus and method for managing multimedia content in a mobile terminal.

Another aspect of the present invention is to provide an apparatus and method for re-editing multimedia content as a cartoon type storyboard in a mobile terminal.

A further aspect of the present invention is to provide an apparatus and method for re-editing content and creating and playing a storyboard in a mobile terminal.

According to one aspect of the present invention, there is provided an apparatus for managing multimedia content in a mobile terminal. The apparatus includes a memory; a screen mapping unit; a speech balloon insertion unit; and a storyboard creation unit. The memory stores each variety of multimedia contents and a storyboard. The screen mapping unit adjusts an image or a moving picture to a frame size and inserts the adjusted image or moving picture in a frame of the storyboard. The speech balloon insertion unit inserts a speech balloon in the frame of the storyboard. Upon the selection of format of a storyboard to be created, the storyboard creation unit controls the screen mapping unit and the speech balloon insertion unit to insert the image, the moving picture, or the speech balloon in the selected frame of the storyboard.

According to another aspect of the present invention, there is provided a method for managing multimedia content in a mobile terminal. The method includes, upon the receipt of a request for creating a storyboard, selecting a format of the storyboard to be created; selecting a frame to which content is to be inputted, from the storyboard; and inputting an image, a speech balloon, and a moving picture contents to the selected frame.

The above and other aspects, features and advantages of the present invention will become more apparent from the following detailed description when taken in conjunction with the accompanying drawings in which:
FIG. 1 illustrates a structure of a mobile terminal for creating a storyboard using multimedia content and managing the created storyboard according to the present invention;
FIG. 2 is a flow diagram illustrating a process of creating a storyboard in a mobile terminal according to the present invention;
FIGs. 3A to 3C illustrate formats of a storyboard created in a mobile terminal according to the present invention;
FIG. 4 is a flow diagram illustrating a process of inserting an image in a storyboard frame in a mobile terminal according to the present invention;
FIG. 5 illustrates a snapshot of a process of defining an area of an image inserted in a storyboard frame in a mobile terminal according to the present invention;
FIG. 6 is a flow diagram illustrating a process of inserting a moving picture in a storyboard frame in a mobile terminal according to the present invention;
FIG. 7 is a flow diagram illustrating a process of inserting a speech balloon in a storyboard frame in a mobile terminal according to the present invention;
FIG. 8 is a flow diagram illustrating a process of inserting background music in a storyboard in a mobile terminal according to the present invention;
FIG. 9 is a flow diagram illustrating a process of playing a storyboard in a mobile terminal according to the present invention; and
FIG. 10 illustrates a storyboard displayed on a mobile terminal display unit according to the present invention.

Preferred embodiments of the present invention will be described herein below with reference to the accompanying drawings. In the following description, well-known functions or constructions are not described in detail since they would obscure the invention in unnecessary detail.

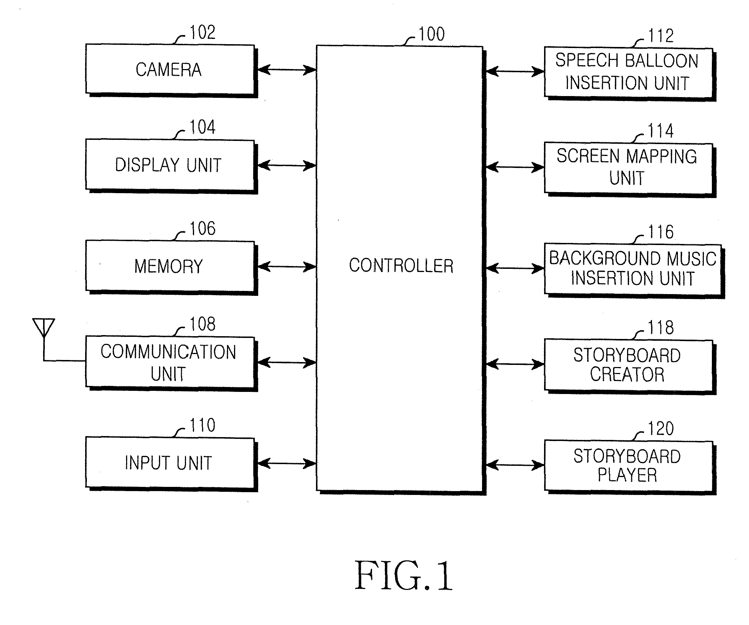

The present invention provides an apparatus and method for re-editing and managing multimedia contents as a cartoon type storyboard in a mobile terminal. The apparatus is described below with reference to FIG. 1.

FIG. 1 illustrates the structure of a mobile terminal for creating a storyboard using contents and managing the created storyboard according to the present invention. In FIG. 1, the mobile terminal according to the present invention includes a controller 100, a camera 112, a display unit 104, a memory 106, a communication unit 108, an input unit 110, a speech balloon insertion unit 112, a screen mapping unit 114, a background music insertion unit 116, a storyboard creation unit 118, and a storyboard player 120.

The camera 102 photographs an image or a moving picture using the photoelectric conversion of an optical image incident on a Charge Coupled Device (CCD) under the control of the controller 100.

The display unit 104 first displays content such as state information (or an indicator), limited numerals and characters, a moving picture, and a still picture generated during operation of the mobile terminal. The display unit 104 likewise displays a storyboard under the control of the controller 100. The display unit 104 can use a color Liquid Crystal Display (LCD).

The memory 106 temporarily stores a program for controlling a general operation of the mobile terminal and data generated during the operation. The memory 106 stores different types of content such as, for example, a short message, a multimedia message, a photograph, and a moving picture data. Also, the memory 106 stores a storyboard according to the present invention.

In a reception mode, the communication unit 108 receives a radio frequency signal through an antenna and processes the received signal by frequency down, de-spreading, and channel decoding. In a transmission mode, the communication unit 108 processes data by channel coding, spreading, and frequency up and transmits the processed data through the antenna. Also, the communication unit 108 can exchange a multimedia message along with a storyboard according to the present invention.

The input unit 110 includes a plurality of keys or a touch screen. The input unit 110 identifies an input for speech subject content, storyboard scrolling, and link information confirmation from a user and provides the identified input to the controller 100.

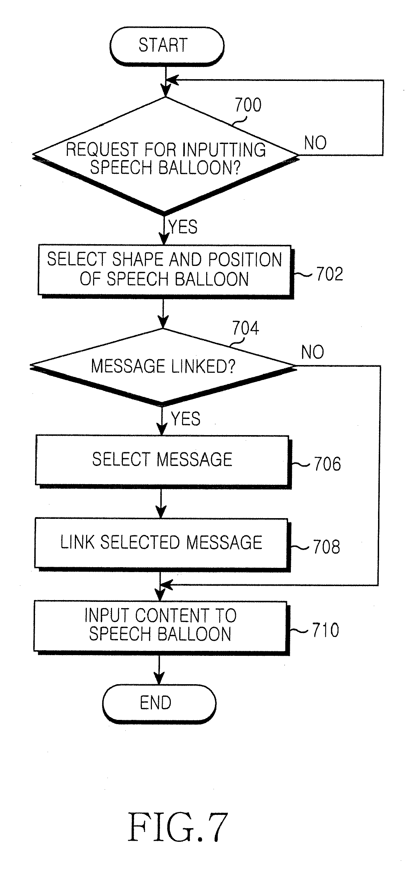

The speech balloon insertion unit 112 inserts a speech balloon in a storyboard frame under the control of the storyboard creation unit 118. A method for inserting the speech balloon using the speech balloon insertion unit 112 is described below with reference to FIG. 7.

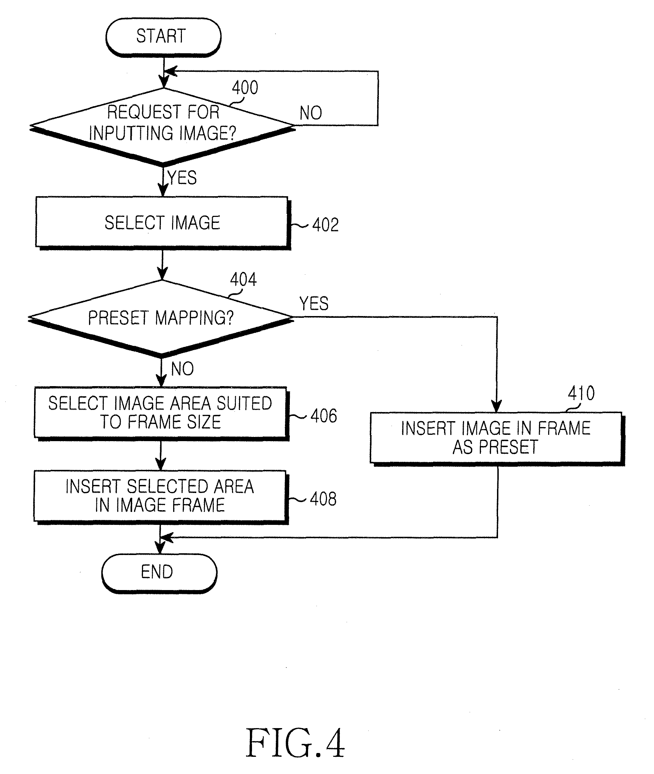

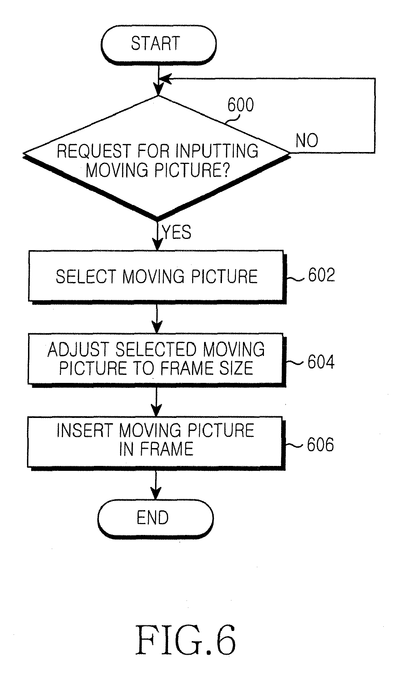

The screen mapping unit 114 adjusts photograph or moving picture to a frame size and inserts the adjusted photograph or moving picture in the storyboard frame under the control of the storyboard creation unit 118. A method for inserting a photograph or a moving picture in the frame using the screen mapping unit 114 is described below with reference to FIGs. 4 and 6.

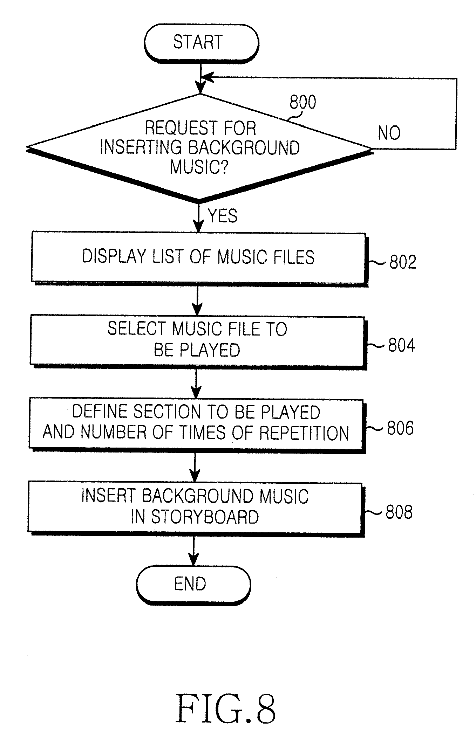

Upon the selection of background music to be played at the time the storyboard is playing, the background music insertion unit 116 inserts the selected background music under the control of the storyboard creation unit 118. A method for inserting background music in the storyboard using the background music insertion unit 116 will be later described with reference to FIG. 8.

Upon the selection of format of a storyboard to be created, the storyboard creation unit 118 creates a storyboard that includes content by controlling the speech balloon insertion unit 112, the screen mapping unit 114, and the background music insertion unit 116 to insert the content in the selected format of the storyboard.

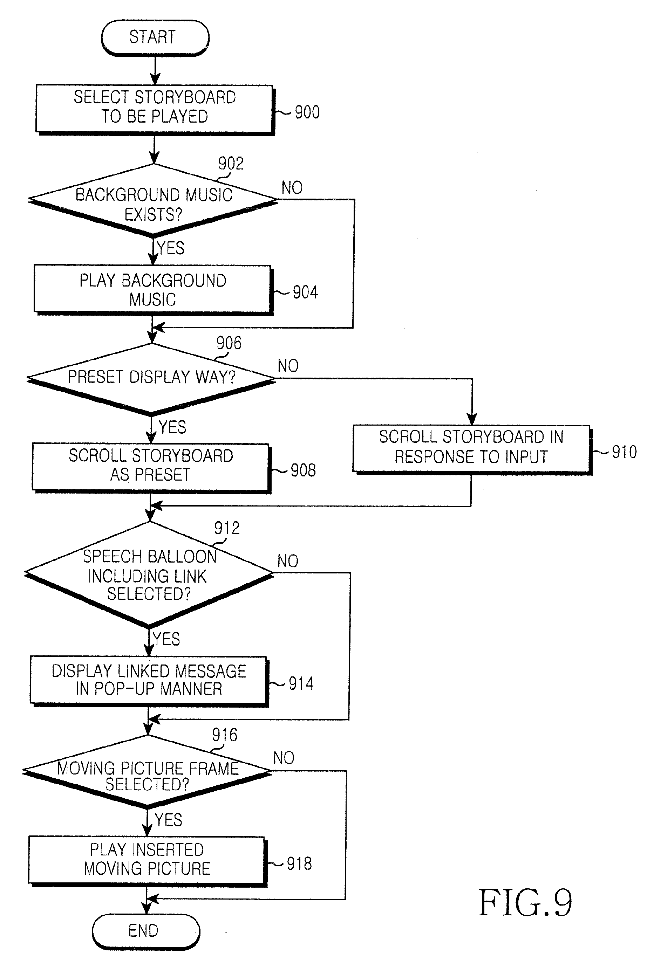

The storyboard player 120 displays and plays a storyboard created in the storyboard creation unit 118 or stored in the memory 106, on the display unit 104. A method for playing a storyboard using the storyboard player 120 is described below with reference to FIG. 9.

In operation, the controller 100 controls the speech balloon insertion unit 112, the screen mapping unit 114, the background music insertion unit 116, the storyboard creation unit 118, and the storyboard player 120. In other words, the controller 100 can perform the functions of the speech balloon insertion unit 112, the screen mapping unit 114, the background music insertion unit 116, the storyboard creation unit 118, and the storyboard player 120. The present invention separately constructs and shows constituent elements in order to distinguish and describe respective functions of the constituent elements. Thus, when a product is actually realized, the product can be constructed so that the controller 100 can control all of the constituent elements. Alternately, the product can be constructed so that the controller 100 can control only part of them.

A method for managing multimedia content in the mobile terminal according to the present invention is described below with reference to the accompanying drawings.

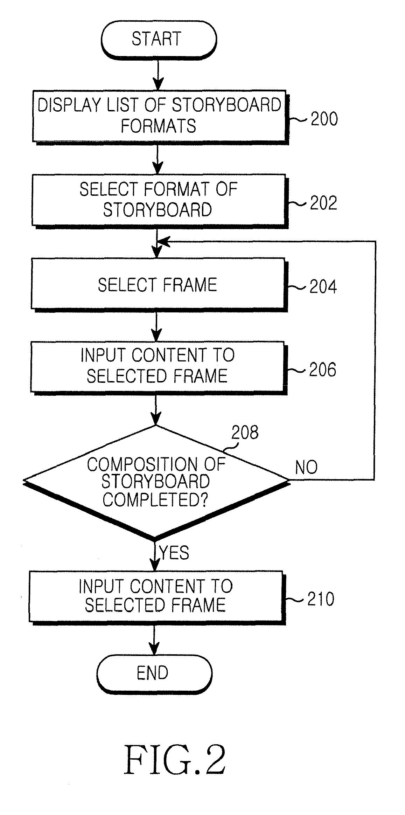

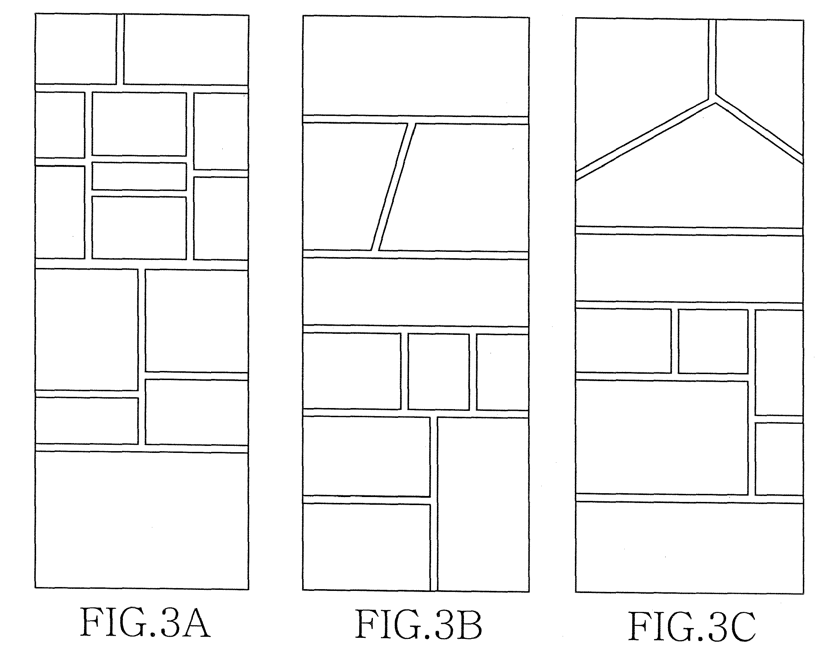

FIG. 2 is a flow diagram of a process of creating a storyboard in the mobile terminal according to the present invention. In FIG. 2, the mobile terminal displays storyboard formats by a list in step 200. The displayed storyboard format can be diverse as shown in FIGs. 3A to 3C. FIGs. 3A to 3C illustrate formats of a storyboard created in the mobile terminal according to the present invention. FIGs. 3A, 3B, and 3C show three types of storyboard formats; however, different storyboard formats can be included since the storyboard format is of a combination of frames having different sizes and formats.

In step 202, a format of a storyboard to be created is selected from the list of the storyboard formats. In step 204, a frame to which contents are to be inputted is selected. In step 206, content, such as an image, a speech subject, and a moving picture, is inputted to the selected frame. In step 208, the process checks whether the composition of the storyboard is complete. If the process checks that the composition of the storyboard is not complete, then steps 204 and 206 are repeated until completion.

If the process checks that the composition of storyboard is complete, the process then goes to step 210 wherein the storyboard including a plurality of content is converted into one file.

FIG. 4 is a flow diagram of a process of inserting an image in a storyboard frame in a mobile terminal according to the present invention. In FIG. 4, the checks whether there is a request for inputting of an image in the mobile terminal in step 400. If the request for the input of an image is achieved, an image to be inputted is selected in step 402. The image is then selected from an image stored in the memory 106 or an image photographed by the camera 102.

In step 404, the process checks whether a method of inserting the selected image is a preset mapping method. If an automatic mapping method is implemented using the preset mapping method, the screen mapping unit 114 automatically inserts the selected image in the frame using the preset mapping method in step 410.

In the preset mapping method, a selected image is automatically adjusted to a frame size and inserted in the same size as the frame size in the frame. Alternately, in cases where the size of the selected image is greater than the frame size, a central portion of the selected image is inserted by the frame size in the frame without size adjustment. Alternately, in cases where the selected image are human figures, the faces of these humans figures are first recognized using a face recognition technique, then magnified or reduced by a predetermined space provided left/right and up/down of the face, then adjusted to the same size as the frame size, and finally inserted in the frame.

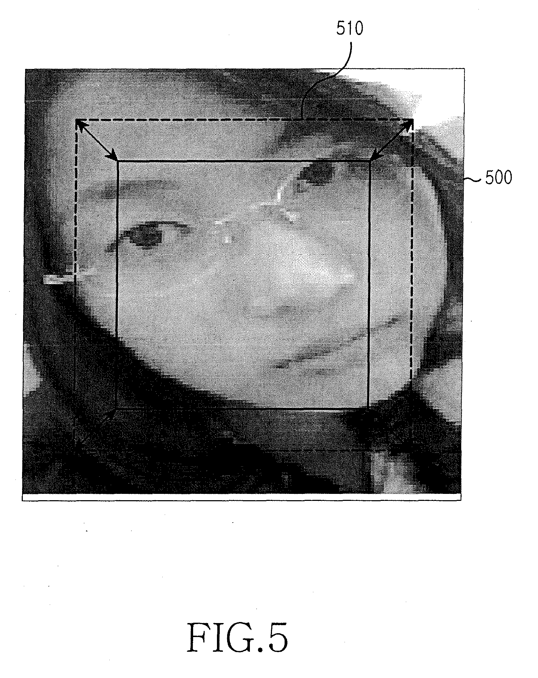

If the preset mapping method is not employed, the process goes to step 406. In step 406, an image area suited to the frame size is defined in the selected image using a method described in FIG. 5 below. In step 408, the screen mapping unit 114 inserts the defined image area in the frame.

FIG. 5 illustrates a procedure of defining an area of an image inserted in a storyboard frame in a mobile terminal according to the present invention. In FIG. 5, a method of defining an image area suited to a frame size in an image 500 to be inserted is described. Here, the image area to be inserted in the frame is defined by first displaying a framework 510 having the same format as a frame on the image 500 to be inserted, then increasing or decreasing the size of the framework 510, and finally moving the position of the framework 510 in omni-direction.

FIG. 6 is a flow diagram of a process of inserting a moving picture in a storyboard frame in a mobile terminal according to the present invention. In FIG. 6, the process checks whether there is a request for input of a moving picture in the mobile terminal in step 600. If there is the request for the input of a moving picture, the process goes to step 602 wherein a moving picture to be inputted is selected. Here, the moving picture can be selected from a moving picture stored in the memory 106 or a moving picture photographed by the camera 102.

In step 604, the screen mapping unit 114 magnifies or reduces the size of the selected moving picture and adjusts the moving picture to the frame size. In step 606, the screen mapping unit 114 inserts the moving picture into the frame.

FIG. 7 is a flow diagram of a process of inserting a speech balloon in a storyboard frame in a mobile terminal according to the present invention. In FIG. 7, the process checks whether there is a request for input of a speech balloon in the mobile terminal in step 700. If there is the request for the input of a speech balloon, the shape and position of a speech balloon to be inputted are selected in step 702. In step 704, checks whether a message will be linked to the speech balloon. If it is checked that the message will not be linked, the process then goes to step 710 wherein the speech balloon insertion unit 112 receives content to be inputted to the speech balloon.

However, if it is checked that the message will be linked, the procees goes to step 706 wherein a message to be linked is selected from transmission/reception short messages or multimedia messages stored in the memory 106. In step 708, the speech balloon insertion unit 112 links the selected message to the speech balloon. In step 710, the speech balloon insertion unit 112 receives content for the speech balloon. In the step 710, in cases where there is a message to be linked to the speech balloon but there is no content for the speech balloon, the speech balloon insertion unit 112 inputs content of some portion of the message (from the front point of the message to some point of the message) to be linked, to the speech balloon.

FIG. 8 is a flow diagram illustrating a process of inserting background music in a storyboard in the mobile terminal according to the present invention. In FIG. 8, the process checks whether there is a request for inserting background music in the mobile terminal in step 800. If there is a request for inserting background music, the background music insertion unit 116 displays a list of insertable music files in step 802. In step 804, a music file, which is to be played as background music, is selected from the displayed list. In step 806, a section of the selected music file which is to be played, and the number of times the music file will be played, when a storyboard is also played, are selected. In step 808, the background music insertion unit 116 then inserts the background music in the storyboard.

FIG. 9 is a flow diagram illustrating a process of playing a storyboard in the mobile terminal according to the present invention. In FIG. 9, a storyboard to be played is selected in step 900. In step 902, the process checks whether there is background music in the selected storyboard. If there is background music, the storyboard player 120 plays the background music in step 904, and then proceeds to step 906. However, if there is no background music, the process goes directly to step 906. In step 906, the process checks whether there is a pre-set way of displaying the storyboard. If there is a pre-set display way, the process then goes to step 908 wherein the storyboard player 120 displays a part of the storyboard on the display unit 104 and scrolls the displayed storyboard depending on the pre-set display size and the scroll speed.

However, if there is no preset display way, the process then goes to step 910 wherein the storyboard player 120 scrolls the storyboard in response to the user's input.

In step 912, the process checks whether a speech balloon including a linked message is selected. If the speech balloon is selected, the storyboard player 120 displays a linked message in a pop-up manner in step 914.

If the speech balloon is not selected, the process then goes to step 916 wherein the process then checks whether a frame that includes a moving picture is selected. If so, the storyboard player 120 plays an inserted moving picture in step 918.

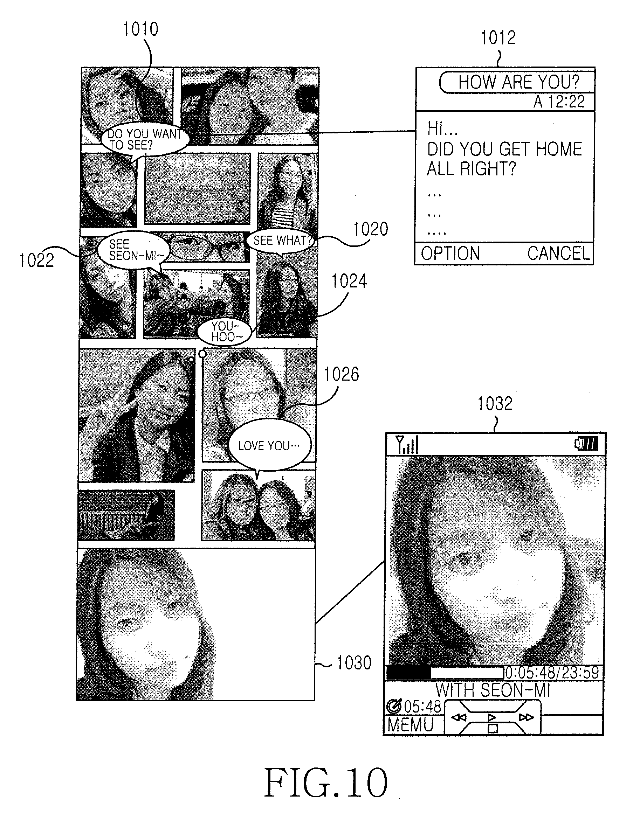

FIG. 10 illustrates a storyboard displayed in the mobile terminal according to the present invention. In FIG. 10, the storyboard is includes a plurality of frames. An Image, a speech balloon, or even a moving picture can be inserted in each frame. In addition, the speech balloon is divided into a speech balloon 1010 with a linked message 1012 and speech balloons 1020, 1022, 1024, and 1026 with no linked message.

The speech balloon 1010 with the linked message 1012 is marked in its background by a shadow, a color, or a message icon to inform the user that the speech balloon 1010 includes the linked message 1012. The linked message 1012 is then displayed in a pop-up manner when the speech balloon 1010 is selected.

In order to inform the user that a frame 1030 includes a moving picture, the frame 1030 including the moving picture is displayed with heavy-thickness edge, a different color, or an icon to notify the user that the frame 1030 is a moving picture frame. The moving picture can also be played within the frame 1030 or can be played using a pop-up window 1032, if the frame 1030 including the moving picture is selected.

As described above, the present invention provides the apparatus and method for re-editing and managing the multimedia contents as the cartoon-type storyboard and, thus, enables a mobile terminal user to effectively manage and arrange, upon demand, a plurality of multimedia content files through a single content file.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the invention has been shown and described with reference to certain preferred embodiments thereof, it will be understood by those skilled in the art that various changes in form and details may be made therein without departing from the scope of the invention as defined by the appended claims.

## Claims

1. An apparatus for managing multimedia content in a mobile terminal, the apparatus comprising:
a memory for storing different varieties of multimedia content and a storyboard;
a screen mapping unit for adjusting an image or a moving picture to a frame size and inserting the adjusted image or moving picture in a frame of the storyboard;
a speech balloon insertion unit for inserting a speech balloon in the frame of the storyboard; and
a storyboard creation unit for, upon the selection of format of a storyboard to be created, controlling the screen mapping unit and the speech balloon insertion unit to insert the image, the moving picture, or the speech balloon in the selected frame of the storyboard.

2. The apparatus of claim 1, further comprising: a background music insertion unit for inserting background music upon the selection of the background music to be played at the time of playing the storyboard, wherein, upon the receipt of a request for inserting the background music, the storyboard creation unit controls the background music insertion unit to insert the background music when creating the storyboard.

3. The apparatus of claim 2, wherein the storyboard creation unit creates the storyboard by one file comprising multimedia contents inserted in the storyboard.

4. The apparatus of claim 2, wherein upon the receipt of a request for inserting the background music, the background music insertion unit inserts the background music to be inserted, a section thereof to be played and the number of times of playing it, in the storyboard, after they are selected.

5. The apparatus of one of claims 1 to 4, wherein upon the selection of the image to be inserted, the screen mapping unit inserts an image area to be inserted in the frame after the image area is defined in the selected image.

6. The apparatus of claim 4, further comprising a camera for photographing an image, wherein the image to be inserted is selected from an image stored in the memory or the image photographed by the camera.

7. The apparatus of one of claims 1 to 4, wherein upon the selection of the image to be inserted, the screen mapping unit magnifies or reduces the image in a pre-set way and inserts the magnified or reduced image in the frame.

8. The apparatus of one of claims 1 to 4, wherein upon the selection of the moving picture to be inserted, the screen mapping unit magnifies or reduces the moving picture in the frame size and inserts the magnified or reduced moving picture in the frame.

9. The apparatus of claim 8, further comprising a camera for photographing a moving picture, wherein the moving picture to be inserted is selected from a moving picture stored in the memory or the moving picture photographed by the camera.

10. The apparatus of one of claims 1 to 9, wherein the speech balloon insertion unit inserts the selected content in the speech balloon after the shape and position of the speech balloon are selected.

11. The apparatus of claim 10, wherein upon the receipt of a request for linking a message to the speech balloon, the speech balloon insertion unit links the selected message to the speech balloon.

12. The apparatus of claim 11, wherein the speech balloon insertion unit inputs a part of content of the message to the speech balloon.

13. The apparatus of one of claims 1 to 12, further comprising a storyboard player for, upon the selection of the storyboard to be played from the memory, controlling a part of the storyboard to be displayed, and the storyboard to be scrolled and displayed in response to scroll input.

14. The apparatus of claim 13, wherein the storyboard player controls the storyboard to be automatically scrolled in a pre-set way when displaying the storyboard.

15. The apparatus of claim 13 or 14, wherein upon checking that the speech balloon with a linked message is selected, the storyboard player displays the linked message in a pop-up manner.

16. The apparatus of one of claims 13 to 15, wherein upon checking that the frame with the moving picture is selected, the storyboard player plays the moving picture.

17. The apparatus of claim 16, wherein the storyboard player displays and plays the moving picture in a pop-up manner.

18. A method for managing multimedia content in a mobile terminal, the method comprising:
upon the receipt of a request for creating a storyboard, selecting a format of the storyboard to be created;
selecting a frame to which content is to be inputted, from the storyboard; and
inputting image, speech balloon, and moving picture contents to the selected frame.

19. The method of claim 18, further comprising:
selecting background music to be inserted in the storyboard; and
inserting the selected background music in the storyboard.

20. The method of claim 19, further comprising: creating the storyboard by one file comprising multimedia contents inserted in the storyboard.

21. The method of claim 19, further comprising: after selecting the background music to be inserted in the storyboard, defining a section of the background music to be played and the number of times of playing it.

22. The method of one of claims 18 to 21, wherein inputting of the image content to the selected frame further comprises:
selecting the image to be inserted;
defining an image area, which is to be inserted in the frame, in the selected image; and
inserting the defined image area in the frame.

23. The method of one of claims 18 to 21, wherein inputting of the image content to the selected frame further comprises:
selecting the image to be inserted; and
magnifying or reducing the image in a preset way and inserting the magnified or reduced image in the frame.

24. The method of claim 22 or 23, wherein the image to be inserted is selected from a stored image and an image photographed for insertion.

25. The method of one of claims 18 to 21, wherein inputting of the moving picture content to the selected frame further comprises:
selecting the moving picture to be inserted; and
magnifying or reducing the moving picture by the frame size and inserting the magnified or reduced moving picture in the frame.

26. The method of claim 25, wherein the moving picture to be inserted is selected from a stored moving picture and a moving picture photographed for insertion.

27. The method of one of claims 18 to 21, wherein inputting of the speech balloon content to the selected frame further comprises:
selecting a shape and a position of the speech balloon;
inputting content to the speech balloon; and
inserting the speech balloon having the content in the storyboard.

28. The method of claim 27, further comprising: after the selecting of the shape and the position of the speech balloon, upon the receipt of a request for linking a message to the speech balloon, selecting a message to be linked; and linking the message to the speech balloon.

29. The method of claim 28, further comprising: after linking the message to the speech balloon, inputting a part of content of the message to the speech balloon when there is no content for the speech balloon.

30. The method of one of claims 18 to 29, further comprising:
upon the receipt of a request for playing the storyboard, selecting the storyboard to be played;
displaying a part of the storyboard; and
scrolling and displaying the storyboard in response to a scroll input.

31. The method of claim 30, wherein in the scrolling and displaying of the storyboard, the storyboard is automatically scrolled and displayed in a preset way in case where display way is preset.

32. The method of claim 30 or 31, further comprising: upon checking that the speech balloon with a linked message is selected, displaying the linked message in a pop-up manner, when playing the storyboard.

33. The method of one of claims 30 to 32, further comprising: upon checking that the frame with the moving picture is selected, playing the moving picture, when playing the storyboard.

34. The method of claim 33, wherein playing of the moving picture, the moving picture is displayed and played in a pop-up manner.

35. An apparatus for managing multimedia content in a mobile terminal, the apparatus comprising:
means for selecting a frame from the storyboard; and
means for inputting image, speech balloon or moving picture contents to the selected frame.

36. The apparatus of claim 35, further comprising:
means for storing image, speech balloon or moving picture contents.

37. A method for managing multimedia content in a mobile terminal, the method comprising:
selecting a frame from a storyboard; and
inputting image, speech balloon or moving picture contents to the selected frame.

38. A computer-readable recording medium having recorded thereon a program for managing multimedia content in a mobile terminal, comprising:
a first code segment, for selecting a frame from a storyboard; and
a second code segment, for inputting image, speech balloon or moving picture contents to the selected frame.
